# EUROPÄISCHE PATENTANMELDUNG

(11) **EP 2 393 053 A1**
(43) Veröffentlichungstag der Anmeldung: **07.12.2011**
(21) Anmeldenummer: 11166588.1
(22) Anmeldetag: 18.05.2011
(51) Int. Cl.: G06Q 10/00, G06F 1/32, G07C 5/00

(54) **Ereignisgesteuerte Telematikeinheit zur Überwachung eines Ladungsträgers und Verfahren zum Betrieb der Telematikeinheit**

(30) Priorität: 07.06.2010 DE 102010022857
(71) Anmelder: Deutsche Post AG, 53113 Bonn (DE)
(72) Erfinder: Heidmann, Nils, D-28359 Bremen (DE); Gorldt, Christian, D-28359 Bremen (DE); Dittmer, Patrick, D-28359 Bremen (DE); Lewandowski, Marco, D-26125 Oldenburg (DE); Windhoff, Dr. Gert, D-28359 Bremen (DE); Westermann, Ulf, D-28213 Bremen (DE)
(74) Vertreter: Jostarndt, Hans-Dieter

(57) **Zusammenfassung**

Die Erfindung betrifft eine Telematikeinheit (10) zur Überwachung eines Ladungsträgers (20), wenigstens umfassend einen Speicher (13), eine Aktivierungseinheit (30), eine Überwachungseinheit (40) und eine Energiequelle (12), die zur Energieversorgung der Komponenten der Telematikeinheit (10) dient. Die Aktivierungseinheit (30) weist dabei wenigstens eine Echt-Zeit-Uhr (32), ein Sensormodul (33) und eine erste Recheneinheit (31) zur Steuerung der Aktivierungseinheit (30) auf, und die Überwachungseinheit (40) weist wenigstens ein Ortungsmittel (42), ein Kommunikationsmittel (43) und eine zweite Recheneinheit (41) auf. Zwischen die Aktivierungseinheit (30) und die Überwachungseinheit (40) sind Datenübertragungsmittel (11) geschaltet, mit denen die Aktivierungseinheit (30) und die Überwachungseinheit (40) miteinander verbindbar sind, wobei die erste Recheneinheit (31) der Aktivierungseinheit (30) ausgebildet ist, um ein Signal der Echt-Zeit-Uhr (32) oder des Sensormoduls (33) auszuwerten und aufgrund dieses Signals ein Aktivierungssignal an die Überwachungseinheit (40) zu übermitteln, mittels dessen die Überwachungseinheit (40) von einem Bereitschaftszustand mit geringerem Stromverbrauch in einen Arbeitszustand mit höherem Stromverbrauch schaltbar ist. Die zweite Recheneinheit (41) der Überwachungseinheit (40) ist ferner ausgebildet, um wenigstens durch das Ortungsmittel (42) erzeugte Positionsdaten über das Kommunikationsmittel (43) an eine zentrale Datenverarbeitungsanlage (50) zu senden und/oder Informationen von dieser abzufragen, wobei im Speicher (13) der Überwachungseinheit (40) Tourinformationen für den Ladungsträger (20) gespeichert sind, und die Recheneinheiten (30,40) der Telematikeinheit (10) Mittel zur Verknüpfung von diesen Tourinformationen mit durch die Echtzeituhr (32), das Sensormodul (33) und/oder das Ortungsmittel (42) bereitgestellten Informationen und zur Auswertung dieser Verknüpfung aufweisen. Die Erfindung betrifft ferner ein Verfahren zum Betrieb einer solchen Telematikeinheit.

## Beschreibung

Die Erfindung betrifft eine Telematikeinheit zur Überwachung eines Ladungsträgers, wobei die Telematikeinheit wenigstens einen Speicher, eine Aktivierungseinheit, eine Überwachungseinheit und eine Energiequelle umfasst, die zur Energieversorgung der Telematikeinheit dient.

Die Erfindung betrifft ferner ein Verfahren zum Betrieb einer solchen Telematikeinheit.

Im Bereich der Logistik ist es bekannt, Lastkraftwagen, Güterwaggons, Ladungsträger wie Frachtcontainer oder Wechselbrücken oder sonstige Gütertransporteinheiten mit Telematikeinheiten zu versehen. Ladungsträger umfassen dabei die Bandbreite von einfachen Kisten bis zum Container. Mit einer solchen Telematikeinheit wird üblicherweise wenigstens die Position eines Ladungsträgers erfasst und diese fortlaufend, zu bestimmten Zeitpunkten oder bei Bedarf an eine zentrale Datenverarbeitungsanlage übermittelt. Die Datenübermittelung kann dabei beispielsweise über ein GSM-Modul erfolgen, das in die Telematikeinheit integriert oder mit dieser verbunden ist.

Derartige Telematikeinheiten können dazu eingesetzt werden, um Transportketten mit Hilfe intelligenter Logistik stärker zu optimieren. Die gesammelten Informationen werden dabei per Kommunikationsmedium an die zentrale Datenverarbeitungsanlage übermittelt, welche die Transparenz aller relevanten Daten im Informations- und Materialfluss ermöglicht und somit erhebliche Verbesserungen verwirklicht. Dadurch ist es aus der Sicht eines Logistikunternehmens unter anderem möglich, eingesetzte Transportfahrzeuge besser auszulasten, die Abholfrequenzen zu reduzieren und den Akquiseaufwand für Ergänzungsladungen zu verringern.

Ergänzend zur Bestimmung der Position eines Ladungsträgers kann der Zustand von Inhalten des Ladungsträgers mittels Sensoren wie Temperatursensoren und/oder Feuchtesensoren gemessen und diese Zustandsdaten ebenfalls an die zentrale Datenverarbeitungsanlage übermittelt werden. Hierbei kann beispielsweise eine Abweichung von Sollwerten der gemessenen Parameter als Alarm an die zentrale Datenverarbeitungsanlage gesendet werden.

Ferner sind elektronische Einheiten bekannt, die mit einem Ladungsträger verbunden werden können, um einen unbefugten Zugriff auf den Ladungsträger zu detektieren. Dabei kann es sich beispielsweise um den Aufbruch oder sonstige Beschädigungen eines Ladungsträgers, aber auch um die Entwendung eines Ladungsträgers handeln. Ein Aufbruch oder eine Beschädigung kann beispielsweise durch einen Sensor oder sonstige Alarmmittel detektiert werden, während eine unbefugte Entwendung eines Ladungsträgers durch eine Abweichung erfasster Positionsdaten von einer vorgegeben Route bzw. einer vorgegebenen Lagerposition detektiert werden kann.

Alternativ oder ergänzend können für eine solche Überwachung eines Ladungsträgers Bewegungssensoren eingesetzt werden. Beispielsweise offenbart die Offenlegungsschrift DE 10 2006 03 571 A1 ein elektronisches Gerät für ein Fahrzeug oder einen Container, das ein GPS/GSM-Modul und einen Bewegungssensor umfasst, durch den ein Bewegen des elektronischen Geräts erfassbar ist.

In allen Ausführungsformen benötigt eine solche Telematikeinheit jedoch Energie, um die elektrischen Bauteile zu betreiben und die verschiedenen Funktionen erfüllen zu können. Auch dazu sind aus dem Stand der Technik verschiedene Lösungen bekannt, um eine Telematikeinheit beispielsweise über eine Batterie, einen Akkumulator, ein Solarpanel, Windkraft oder durch Bewegungsgeneratoren kontinuierlich oder temporär mit Energie zu versorgen.

Durch die immer größer werdende Verbreitung von Telematikeinheiten, die mit Primärzellen und/oder regenerativen Energien betrieben werden, ergeben sich zusätzlich zu der Auswahl einer geeigneten Energiequelle jedoch auch Anforderungen an den Energieverbrauch, um diesen so gering wie möglich zu halten. Um diesen Anforderungen zu begegnen, gibt es beispielsweise Telematikeinheiten, die nur auf relevante Ereignisse reagieren und ansonsten nahezu inaktiv sind, um so Energie zu sparen. Diese Ereignisse können durch Zustandsänderungen am Fahrzeug wie beispielsweise die Öffnung einer Tür oder durch das Erreichen bestimmter geographischer Positionen (Fangkreise) ausgelöst werden.

Auch ist es beispielsweise aus der Offenlegungsschrift DE 197 33 579 A1 bekannt, eine Telematikeinheit aus der Ferne über ein vorhandenes Kommunikationsmedium mit Steuerbefehlen zu versorgen, welche die Telematikeinheit erst abarbeitet, wenn sie zyklisch von einem Bereitschaftszustand mit geringem Stromverbrauch in einen Arbeitszustand umschaltet.

Aus ähnlichen Bereichen innerhalb der Logistik ist es ebenfalls bekannt, elektronische Geräte mit Ortungsmitteln einzusetzen, wobei beispielsweise die Offenlegungsschrift DE 10 2007 018 633 A1 ein Laufzeitprüfgerät beschreibt, das Postsendungen beigefügt wird, um deren Transportverlauf zu registrieren. Das Laufzeitprüfgerät ist dazu mit Sensoren, Ortungsmitteln wie GPS und Speichermedien ausgestattet. Um den Energieverbrauch des elektronischen Gerätes zu minimieren, ist es beispielsweise in der Lage, Änderungen der Transportart zu erkennen. Es wird dabei angenommen, dass sich mit der Transportart auch die Empfangsbedingungen für das Ortungsmittel verändern, so dass Ortungsversuche in Abhängigkeit von der Transportart erfolgen, um vergebliche Ortungsversuche möglichst zu vermeiden. Ferner sind die Zyklen einer periodischen Ortung ebenfalls abhängig von der Transportart oder der Position einer Postsendung.

Bekannte Lösungen haben sich aber als nicht ausreichend erwiesen, um im Bereich der Logistik ein effektives Ladungsträgermanagement in Verbindung mit einem möglichst geringen Energieverbrauch der dafür eingesetzten Telematikeinheiten zu ermöglichen.

Aufgabe der Erfindung ist es daher, eine verbesserte Telematikeinheit mit Mitteln für eine intelligente Arbeitsweise bereitzustellen, durch welche sich der Energieverbrauch einer Telematikeinheit weiter senken lässt.

Ferner ist es Aufgabe der Erfindung, ein Verfahren zum Betrieb einer solchen Telematikeinheit bereitzustellen.

Erfindungsgemäß wird diese Aufgabe durch eine Telematikeinheit mit den Merkmalen des unabhängigen Anspruches 1 gelöst. Vorteilhafte Weiterbildungen der Telematikeinheit ergeben sich aus den Unteransprüchen 2-3. Die Aufgabe wird ferner durch ein Verfahren nach Anspruch 4 gelöst. Vorteilhafte Ausführungsformen des Verfahrens ergeben sich aus den Unteransprüchen 5-14.

Die erfindungsgemäße Telematikeinheit zur Überwachung eines Ladungsträgers umfasst wenigstens einen Speicher, eine Aktivierungseinheit, eine Überwachungseinheit und eine Energiequelle, die zur Energieversorgung der Komponenten der Telematikeinheit dient. Die Aktivierungseinheit weist dabei wenigstens eine Echt-Zeit-Uhr, ein Sensormodul und eine erste Recheneinheit zur Steuerung der Aktivierungseinheit auf, und die Überwachungseinheit weist wenigstens ein Ortungsmittel, ein Kommunikationsmittel und eine zweite Recheneinheit auf. Zwischen die Aktivierungseinheit und die Überwachungseinheit sind Datenübertragungsmittel geschaltet, mit denen die Aktivierungseinheit und die Überwachungseinheit miteinander verbindbar sind, wobei die erste Recheneinheit der Aktivierungseinheit ausgebildet ist, um ein Signal der Echt-Zeit-Uhr oder des Sensormoduls auszuwerten und aufgrund dieses Signals ein Aktivierungssignal an die Überwachungseinheit zu übermitteln, mittels dessen die Überwachungseinheit von einem Bereitschaftszustand mit geringerem Stromverbrauch in einen Arbeitszustand mit höherem Stromverbrauch schaltbar ist. Die zweite Recheneinheit ist ferner ausgebildet, um wenigstens durch das Ortungsmittel erzeugte Positionsdaten über das Kommunikationsmittel an eine zentrale Datenverarbeitungsanlage zu senden und/oder Informationen von dieser abzufragen, wobei im Speicher der Überwachungseinheit Tourinformationen für den Ladungsträger gespeichert sind, und die Recheneinheiten der Telematikeinheit Mittel zur Verknüpfung von diesen Tourinformationen mit durch die Echtzeituhr, das Sensormodul und/oder das Ortungsmittel bereitgestellten Informationen und zur Auswertung dieser Verknüpfung aufweist.

Die Verknüpfung und Auswertung ermöglicht insbesondere, dass ein Senden von Informationen an die zentrale Datenverarbeitungsanlage und ein Abrufen von Informationen von der zentralen Datenverarbeitungsanlage in Abhängigkeit vom Zustand des Ladungsträgers erfolgt, der sich durch Informationen der Echtzeituhr, des Sensormoduls und/oder des Ortungsmittels ergibt, wobei die jeweiligen Tourinformationen in die Auswertung mit einbezogen werden können.

Die Recheneinheiten der Telematikeinheit sind somit so ausgebildet, dass sie mehrere Parameter auswerten und in eine intelligente Steuerung der Telematikeinheit einfließen lassen können, um möglichst wenig Strom zu verbrauchen. Die funktionale Trennung von Komponenten der Telematikeinheit in eine Aktivierungseinheit und eine Überwachungseinheit ermöglicht es dabei, dass die Komponenten der Überwachungseinheit mit höherem Stromverbrauch von den Komponenten der Aktivierungseinheit mit geringerem Stromverbrauch getrennt werden und die Aktivierungseinheit die Überwachungseinheit nur aktiviert/weckt, wenn dies erforderlich ist.

In einem Ausführungsbeispiel der Erfindung weist das Sensormodul der Aktivierungseinheit einen Bewegungssensor und/oder ein RFID-Transponder auf. Beide Mittel können zur Ermittelung des Zustands des Ladungsträgers herangezogen werden. Das Ortungsmittel der Überwachungseinheit kann ein GPS-Modul und das Kommunikationsmittel der Überwachungseinheit ein GSM-Modul oder GPRS-Modul aufweisen.

Das erfindungsgemäße Verfahren zum Betrieb einer solchen Telematikeinheit sieht vor, dass die erste Recheneinheit bei Erreichen eines definierten Zeitpunktes ausgelöst durch die Echtzeituhr oder bei einem Signal des Sensormoduls ein Aktivierungssignal an die Überwachungseinheit übermittelt, wobei dieses Aktivierungssignal die Überwachungseinheit von einem Bereitschaftszustand mit geringerem Stromverbrauch in einen Arbeitszustand mit höherem Stromverbrauch schaltet, und dass die Recheneinheiten der Telematikeinheit daraufhin bereitgestellte Informationen des Ortungsmittels, der Echtzeituhr und/oder des Sensormoduls mit den Tourinformationen für den Ladungsträger verknüpfen und auswerteen, wobei die Telematikeinheit anhand dieser Auswertung ermittelt, zu welchen Zeitpunkten wenigstens die durch das Ortungsmittel erzeugten Positionsdaten über das Kommunikationsmittel an die zentrale Datenverarbeitungsanlage zu übermitteln sind und/oder Informationen von dieser abzufragen sind und diese Übermittelung und/oder Abfrage entsprechend erfolgt.

Ein Signal des Sensormoduls kann ausgelöst werden, wenn ein Bewegungssensor des Sensormoduls eine Bewegung des Ladungsträgers detektiert. Ein Signal des Sensormoduls kann auch ausgelöst werden, wenn ein RFID-Transponder des Sensormoduls detektiert, dass er von einem RFID-Lesegerät in der Nähe des Ladungsträgers erfasst wurde. Diese Ereignisse können beispielsweise als das Ende eines Lagerzustandes gewertet werden, an dem die Telematikeinheit neue Tourdaten von der zentralen Datenverarbeitungsanlage abfragen muss.

In einem Ausführungsbeispiel des Verfahrens ist vorgesehen, dass Tourinformationen im Speicher Übermittelungsinformationen zu wenigstens zwei Zuständen des Ladungsträgers umfassen, wobei diese Übermittelungsinformationen Angaben zu dem Intervall beinhalten, mit dem wenigstens durch das Ortungsmittel erzeugte Positionsdaten an die zentrale Datenverarbeitungsanlage übermittelt werden sollen, wobei dieses Intervall für einen ersten Zustand anders ist als für einen zweiten Zustand.

Die Recheneinheiten der Telematikeinheit können dabei Informationen zum Zustand eines Ladungsträgers zur Bestimmung des Übermittelungsintervalls von wenigstens den Positionsdaten an die zentrale Datenverarbeitungsanlage aus den Positionsdaten des Ortungsmittels, durch die Echtzeituhr und/oder durch das Sensormodul erhalten. Beispielsweise ist für die Telematikeinheit ein erster Zustand des Ladungsträgers gegeben, sobald das Sensormodul ein Signal an die zweite Recheneinheit der Überwachungseinheit übermittelt.

Auch kann für die Telematikeinheit ein zweiter Zustand des Ladungsträgers gegeben sein, sobald die Positionsdaten des Ortungsmittels innerhalb eines in den Tourinformationen definierten Fangkreises liegen. Dies könnte beispielsweise das Erreichen eines Zielortes und damit das Ende einer Tour bedeuten, bei dem sich der Zustand des Ladungsträgers ändert. Im zweiten Zustand des Ladungsträgers kann insbesondere vorgesehen sein, dass keine Übermittelung von Positionsdaten an die zentrale Datenverarbeitungsanlage erfolgt.

Für die Telematikeinheit kann ein erster oder zweiter Zustand des Ladungsträgers auch gegeben sein, sobald ein RFID-Transponder des Sensormoduls detektiert, dass er von einem RFID-Lesegerät in der Nähe des Ladungsträgers erfasst wurde.

In einem Ausführungsbeispiel des erfindungsgemäßen Verfahrens ermittelt die Telematikeinheit an einem in den Tourinformationen definierten Zeitpunkt durch das Ortungsmittel die Position der Telematikeinheit, und wenn diese Position nicht mit den für diesen Zeitpunkt in den Tourinformationen vorgegebenen Position übereinstimmt, wird über die Kommunikationsmittel ein entsprechendes Signal an die zentrale Datenverarbeitungsanlage übermittelt. So kann überwacht werden, ob ein Ladungsträger rechtzeitig eine Route begonnen hat, wobei die Notwendigkeit dieser Meldung auch abhängig von den jeweiligen Tourinformationen ist. Bei den Tourinformationen handelt es sich vorzugsweise um veränderliche Informationen, die von der zentralen Datenverarbeitungsanlage über das Kommunikationsmittel an die Telematikeinheit übermittelt und im Speicher hinterlegt werden.

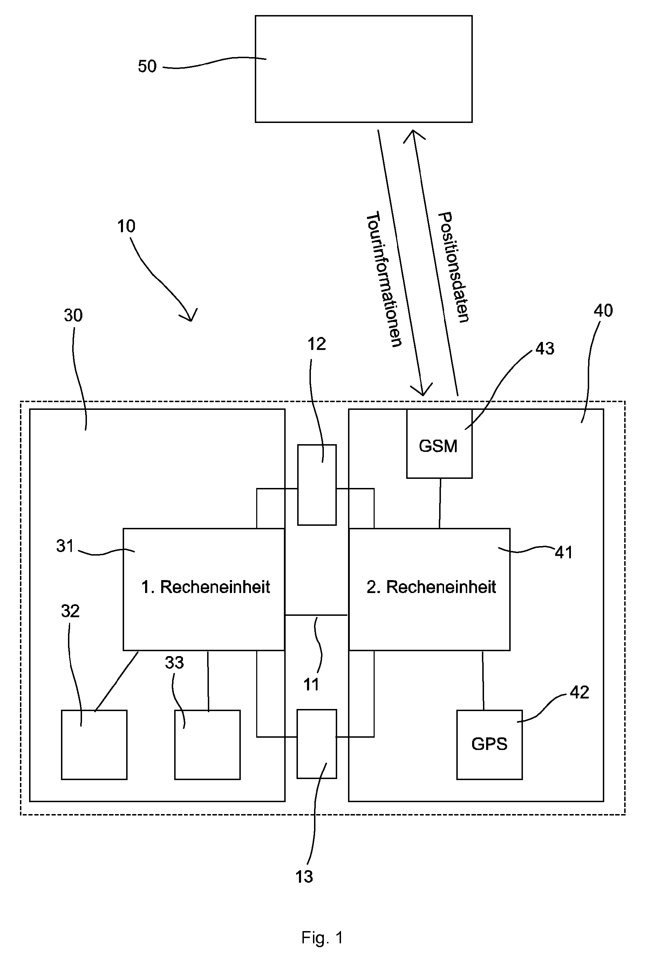

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig.1.

Fig. 1 zeigt schematisch den Aufbau eines Ausführungsbeispiels der erfindungsgemäßen Telematikeinheit 10 im Zusammenspiel mit einer entfernt von der Telematikeinheit 10 angeordneten zentralen Datenverarbeitungsanlage 50. Dabei ist die Telematikeinheit 10 ereignisgesteuert, und die zentrale Datenverarbeitungsanlage 50 kommuniziert mit mehreren Telematikeinheiten, von denen in Fig. 1 im Verhältnis zur Datenverarbeitungsanlage 50 lediglich eine Telematikeinheit 10 stark vergrößert dargestellt ist, da die Darstellung lediglich die wesentlichen Komponenten der Erfindung veranschaulichen soll.

Die Aufgaben der Telematikeinheit 10 sind Ortung, Kommunikation und Identifikation, um die Ladungsträgerortung während des logistischen Prozesses zu ermöglichen. Die zentrale Datenverarbeitungsanlage 50 umfasst eine Middleware mit Mitteln zur intelligenten Verarbeitung der Daten aller eingesetzten Telematikeinheiten, woraus eine Optimierung in der Planung und Steuerung von Transportprozessen resultiert. Dabei ist jede Telematikeinheit eindeutig im Netzwerk identifizierbar und auch separat ansprechbar.

Das Softwaresystem der Datenverarbeitungsanlage 50 ist für die energieeffiziente Einsatzplanung der Telematikeinheiten sowie für die Weitergabe von Daten an die operativen Systeme mehrerer Nutzer zuständig, um so eine verbesserte Disposition zu realisieren und insbesondere eine Verkehrsvermeidung nachhaltig zu verwirklichen. Die Software und das System können mehreren Nutzern zur Verfügung gestellt werden, die Telematikeinheiten überwachen wollen. Dabei sind an die Software vielfältige Anforderungen zu stellen, da über diese viele Probleme der Distribution gelöst werden müssen, um die Bedürfnisse der Anwender zu erfüllen. Aus Nutzersicht ist beispielsweise eine durchgängige Dokumentation über die Bewegung und den Einsatz von Ladungsträgern wünschenswert, mit der ein Tracking & Tracing der Ladungsträger verwirklicht werden kann. Die Oberfläche der Software sollte benutzerfreundlich gestaltet sein und stellt beispielsweise eine graphische Unterstützung zur Visualisierung von eigenen Niederlassungen der einzelnen Nutzer zur Verfügung. In einer Suchfunktion kann nach verschiedenen Kriterien wie Auftragsnummer, Ladungsträgernummer, Standort, etc. gesucht werden. Durch diese Suchfunktion soll es zu einer Erhöhung der Transparenz über den eingesetzten Pool an Ladungsträgern sowie zu einer effektiven Nutzung der Ladungsträger am Standort kommen.

Die Telematikeinheit 10 ist vorzugsweise in einem Gehäuse (gestrichelte Umrisse) untergebracht, das beliebig ausgestaltet sein kann, um es an einem Ladungsträger 20 wie einem Behälter, einem Container oder einer Wechselbrücke anzubringen. Die Telematikeinheit 10 kann dabei fest in den jeweiligen Ladungsträger 20 integriert oder mobil ausgestaltet sein.

Die Telematikeinheit 10 umfasst eine Energiequelle 12, wobei diese in das Gehäuse der Telematikeinheit 10 integriert sein kann, wie es in der Fig. 1 schematisch dargestellt ist. Die Energiequelle kann jedoch auch entfernt von der Telematikeinheit 10 angeordnet und lediglich mit der Telematikeinheit verbunden sein. Beispielsweise können auf dem Ladungsträger 20 Solarmodule vorgesehen sein, über welche die Telematikeinheit 10 mit Strom versorgt wird. Auch andere Quellen wir Batterien, Akkumulatoren, Bewegungsgeneratoren, Windkraftanlagen, Bordquellen eines Lastkraftwagens, etc. müssen nicht in die Telematikeinheit 10 integriert sein, sondern können auch entfernt von dieser angeordnet sein, solange sie in Verbindung mit der Telematikeinheit 10 stehen, um diese mit Strom zum Betrieb der elektronischen Komponenten der Telematikeinheit 10 zu versorgen. Bevorzugt ist jedoch eine Integration der Energiequelle in die Telematikeinheit, um eine möglichst kompakte und vielfältig einsetzbare Einheit zu erreichen. Vorzugsweise werden als Energiequelle daher auch Batterien und/oder Akkumulatoren eingesetzt.

Zu den elektronischen Komponenten der Telematikeinheit 10 zählen wenigstens ein Speicher 13, eine Aktivierungseinheit 30 und eine Überwachungseinheit 40. Dabei weist die Aktivierungseinheit 30 eine erste Recheneinheit 31 auf, welche die Funktionen der Aktivierungseinheit 30 steuert, während die Überwachungseinheit 40 eine zweite Recheneinheit 41 aufweist, welche die Funktionen der Überwachungseinheit 40 steuert.

Die beiden Einheiten bzw. Recheneinheiten werden im Sinne dieser Erfindung funktional als getrennte bzw. verschiedene Komponenten angesehen, was aber lediglich verdeutlichen soll, dass die Aktivierungseinheit 30 zur Aktivierung der Überwachungseinheit 40 dient und auch getrennt von der Überwachungseinheit 40 arbeiten kann, wobei beiden Einheiten die für ihre Funktionen erforderlichen Komponenten zugeordnet sind. Die Überwachungseinheit 40 wird dabei so oft wie möglich in einen Betriebszustand versetzt, in dem sie nur ein Minimum an Energie verbraucht. Dies beinhaltet insbesondere nicht das Versenden von Positionsdaten der Telematikeinheit 10 an die zentrale Datenverarbeitungsanlage 50, aber auch nicht das Abrufen von Daten von der zentralen Datenverarbeitungsanlage 50. Die Aktivierungseinheit 30 ist dagegen ständig in Betrieb, um auf Ereignisse reagieren zu können und die Überwachungseinheit 40 wird bei definierten Ereignissen durch die Aktivierungseinheit 30 in einen Arbeitszustand versetzt, in dem mehr Strom verbraucht wird.

Trotz der zur Beschreibung der Erfindung funktionalen Trennung der Aktivierungseinheit 30 von der Überwachungseinheit 40 müssen die Komponenten der beiden Einheiten nicht strikt getrennt voneinander in der Telematikeinheit 10 angeordnet sein, wie es schematisch in Fig. 1 dargestellt ist, sondern die einzelnen Komponenten können auch gemeinsam an beliebigen Positionen innerhalb eines Gehäuses angeordnet sein, um beispielsweise eine möglichst kleine Telematikeinheit 10 zu realisieren. Auch die erste und zweite Recheneinheit 31 und 41 müssen nicht durch zwei verschiedene Prozessoren gebildet werden, sondern können innerhalb eines einzigen Bordrechners realisiert werden, so dass beide Recheneinheiten Zugriff auf den Speicher 13 haben können.

Ergänzend kann die Telematikeinheit 10 andere funktionale Komponente wie ein Laderaumüberwachungsmodul oder Zustandssensoren wie Temperatursensoren und/oder Feuchtesensoren umfassen, so dass die nachfolgende Beschreibung einzelner Komponenten der Telematikeinheit nicht abschließend ist.

Die funktionalen Komponenten der Aktivierungseinheit 30 umfassen dabei neben der ersten Recheneinheit 31 wenigstens eine Echtzeituhr 32 und ein Sensormodul 33. Bei der Echtzeituhr 32 handelt es sich um eine Uhr, die auch beim Ausschalten eines Gerätes die Uhrzeit beibehält. Die Echtzeituhr 32 kann eine Hardware- oder Software-Echtzeituhr beliebiger Ausgestaltung sein.

Das Sensormodul 33 kann verschieden ausgestaltet sein, um Ereignisse durch Sensoren oder sonstige Mittel zu detektieren. Beispielsweise kann das Sensormodul 33 einen Bewegungssensor aufweisen, der eine Bewegung der Telematikeinheit 10 zusammen mit dem Ladungsträger 20 detektiert. Ausgestaltungen derartiger Bewegungssensoren bzw. Beschleunigungssensoren sind dem Fachmann bekannt und sollen hier nicht ausführlich beschrieben werden. Wird ein Ladungsträger 20 beispielsweise von einer vorherigen Ruheposition durch ein Lastfahrzeug aufgenommen, wird diese Bewegung von dem Sensormodul 33 der Telematikeinheit 10 detektiert und kann beispielsweise als Start einer Tour oder zumindest als Änderung des Zustands des Ladungsträgers gewertet werden.

Dieses Ereignis kann dabei kombiniert werden mit anderen Parametern wie der Zeit, um beispielsweise auszuwerten, ob ein Ladungsträger 20 bis zu einem bestimmten Zeitpunkt eine bestimmte Position verlassen hat bzw. eine Tour rechtzeitig gestartet ist. Ist die Tour nicht rechtzeitig gestartet, kann vorgesehen sein, dass dies der zentralen Datenverarbeitungsanlage mitgeteilt wird. Ist die Tour jedoch rechtzeitig gestartet, kann die Auswertelogik der Telematikeinheit beinhalten, dass keine Daten an die zentrale Datenverarbeitungsanlage 50 übermittelt werden müssen, da die Tour ordnungsgemäß gestartet ist und kein Bedarf für eine Mitteilung besteht. So kann Energie gespart werden, da die Telematikeinheit 10 nur bei Bedarf sendet.

Die Vorgaben für die Auswertelogik der Telematikeinheit 10 werden vorzugsweise in Form von Tourinformationen bzw. Tourdaten über die zentrale Datenverarbeitungseinheit 50 und das Kommunikationsmittel 43 an die Telematikeinheit 10 überspielt. So kann es beispielsweise vorgesehen sein, dass ein Nutzer einer Telematikeinheit über ein Internet-Portal der zentralen Datenverarbeitungsanlage 50 Tourdaten für diese oder mehrere Telematikeinheiten vorgibt, die Informationen darüber beinhalten, ob bei dem beschriebenen Ereignis eine Mitteilung an die Zentrale und damit an den Nutzer übermittelt werden soll oder nicht. Das Ereignis löst somit nicht zwingend eine Mitteilung aus, die Energie verbrauchen würde, sondern wenn es für eine bestimmte Tour unerheblich ist, ob ein Ladungsträger 20 rechtzeitig eine Position verlassen hat, würde auf die Mittelung verzichtet, was zu einem reduzierten Energieverbrauch beitragen würde.

Das Sensormodul 33 kann ferner einen RFID-Transponder umfassen, was im Sinne dieser Erfindung ebenfalls als Sensor anzusehen ist, da er zu Detektion eines Ereignisses dienen kann. Der RFID-Transponder kann ein aktiver oder passiver RFID-Tag sein. Dabei kann die Telematikeinheit 10 über den RFID-Transponder eigenständig Informationen über den geographischen Standort der Telematikeinheit 10 gewinnen.

Innerhalb logistischer Prozesse finden häufig Funktechnologien wie RFID (Radio Frequency Identification) Verwendung, wozu an verschiedenen Positionen RFID-Lesegeräte (RFID-Reader) installiert werden. RFID-Lesegeräte befinden sich beispielsweise an Ein- und Ausgängen von Logistikzentren, wo diese zur Identifikation von Fahrzeug und Fracht genutzt werden. Befindet sich ein Ladungsträger 20 zusammen mit dem RFID-Transponder der Telematikeinheit 10 in der Nähe eines solchen RFID-Lesegerätes, erkennt der RFID-Tag, dass er von dem Lesegerät erfasst wurde bzw. erkennt, dass er sich in der Nähe des Lesegerätes befindet. Dies kann ein Ereignis auslösen, das von der ereignisgesteuerten Telematikeinheit 10 verwertet werden kann.

Die Verwendung des Signals des RFID-Tags kann dabei unterschiedlich sein. Es kann beispielsweise jedes Empfangssignal zur Erzeugung eines Ereignisses genutzt werden. Es ist aber auch möglich, dass der RFID-Tag über eine Auswertelogik verfügt, die es ermöglicht, nur bei der Erkennung spezieller RFID-Lesegeräte ein Ereignis auszulösen. Dies ist beispielsweise der Fall, wenn innerhalb eines Frachtzentrums mehrere RFID-Lesegeräte durchlaufen werden, es für die Tour aber nur relevant ist, dass der Ladungsträger 20 ein RFID-Lesegerät am Aus- oder Eingang des Frachtzentrums passiert.

Eine weitere Alternative besteht darin, dass der RFID-Tag bei jeder Erkennung eines RFID-Readers ein Ereignis auslöst, im Anschluss genauere Informationen zur Aktivierungseinheit 30 oder zur Überwachungseinheit 40 überträgt und somit die Entscheidungslogik bei der Telematikeinheit 10 liegt. Die verwendete Entscheidungslogik kann sich sowohl auf die ID des Readers, die Signalstärke des empfangenen Signals aber auch auf andere Unterscheidungsmerkmale beziehen.

Bei der Verwendung von RFID im Zusammenhang mit ereignisgesteuerten Telematikeinheiten können somit vorhandene und/oder speziell installierte RFID-Reader genutzt werden, um gezielt ein Ereignis auszulösen und der Telematikeinheit 10 das Erreichen oder Verlassen einer bestimmten geographischen Position mitzuteilen. Für die Telematikeinheit bzw. die Nutzer der Telematikeinheit kann dieses Erreichen einer geographischen Position als Auslöser nachfolgender Prozesse dienen. Beispielsweise kann ein Erreichen eines Frachtzentrums das Ende einer Tour und das Beenden der vorherigen Übermittelung von Positionsdaten bedeuten, während das Verlassen eines Frachtzentrums den Beginn einer Tour und damit die nachfolgende Übermittelung von Positionsdaten bedeuten kann.

Auch diese Ereignisse können kombiniert werden mit anderen Parametern wie der Zeit, um auszuwerten, ob ein Ladungsträger 20 bis zu einem bestimmten Zeitpunkt den RFID-Reader eines Frachtzentrums passiert hat bzw. eine Tour rechtzeitig gestartet ist. Hierzu sei auf die vorherigen Ausführungen zum Einsatz von Bewegungssensoren verwiesen.

Das Sensormodul 33 kann ferner alleine oder in Kombination andere Arten von Sensoren beinhalten, die dazu geeignet sind, ein für einen Ladungsträger relevantes Ereignis zu detektieren. Hierbei kommen Temperatursensoren, Drucksensoren, Feuchtesensoren, etc. in Betracht.

Die Echtzeituhr 32 und das Sensormodul 33 stehen in Verbindung mit der ersten Recheneinheit 31 der Aktivierungseinheit 30, die über die Energiequelle 12 mit Strom versorgt wird und permanent aktiv ist. Die Aktivierungseinheit 30 steht wiederum über Datenübertragungsmittel 11 in Verbindung mit der Überwachungseinheit 40. Die Datenübertragungsmittel 11 können drahtgebunden oder auch drahtlos sein, wenn die Aktivierungseinheit 30 beispielsweise entfernt von der Überwachungseinheit 40 angeordnet werden soll. Dies könnte der Fall sein, wenn die Überwachungseinheit 40 an einer Position am Ladungsträger 20 angeordnet werden soll, die einen besseren Empfang und Versand von Positionsdaten über das Kommunikationsmittel 43 ermöglicht, während die Aktivierungseinheit 30 beispielsweise für eine optimale Funktion des Sensormoduls 33 an einer anderen Position am Ladungsträger 20 positioniert werden soll.

Die Überwachungseinheit 40 umfasst neben der zweiten Recheneinheit 41 wenigstens ein Ortungsmittel 42 und ein Kommunikationsmittel 43 und hat Zugriff auf den Speicher 13. Bei dem Ortungsmittel 42 kann es sich um ein GPS-Modul handeln, mit dem die Position der Telematikeinheit 10 und damit des zugehörigen Ladungsträgers 20 erfasst werden kann. Als Kommunikationsmittel 43 können beispielsweise ein GSM-Modul oder ein GPRS-Modul eingesetzt werden, um wenigstens die von dem Ortungsmittel 42 erfassten Positionsdaten an die zentrale Datenverarbeitungsanlage 50 zu übermitteln. Neben den Positionsdaten können über das Kommunikationsmittel 43 auch andere Informationen wie Messwerte von Sensoren wie Temperatur und/oder Feuchte, der Ladezustand einer Batterie bzw. eines Akkumulators, etc. an die zentrale Datenverarbeitungsanlage übermittelt werden.

Die Datenübermittelung erfolgt dabei vorzugsweise über ein komprimiertes binäres Format über eine GSM-Infrastruktur. Die Daten werden an ein Softwareinterface der Datenverarbeitungsanlage 50 übertragen, welche diese in ein XML-Format transformiert und an eine Softwareschicht überträgt.

Das Kommunikationsmittel 43 wird jedoch auch dazu genutzt, um von der zentralen Datenverarbeitungsanlage 50 Daten auf die Telematikeinheit 10 zu überspielen bzw. an der zentralen Datenverarbeitungsanlage 50 abzufragen. Hierbei handelt es sich wenigstens um Tourinformationen für den betreffenden Ladungsträger 20, die im Speicher 13 hinterlegt und von der Telematikeinheit 10 für eine intelligente Steuerung der Telematikeinheit 10 herangezogen werden. Es handelt sich somit um eine bidirektionale Datenverbindung.

Im Folgenden werden verschiedene Beispiele für die intelligente Arbeitsweise der Telematikeinheit beschrieben, die durch die erfindungsgemäße Ausgestaltung der Telematikeinheit verwirklicht werden können. Unter intelligenter Arbeitsweise wird verstanden, dass sich die erfindungsgemäße Telematikeinheit den Umweltbedingungen anpasst und in einen Status versetzt wird, der dem betriebswirtschaftlichen Zweck des zugehörigen Ladungsträgers entspricht. Hierbei wird vorzugsweise wenigstens zwischen den beiden Zuständen "Lagern" und "Tour" unterschieden. Die Definition eines Status kann geeignet gewählt werden. In einem Ausführungsbeispiel der Erfindung beschreibt der Status "Lagern" einen Zustand, in dem ein Ladungsträger abgestellt wurde und darauf wartet, beladen und transportiert zu werden. Der Status "Tour" beschreibt dann einen Status, in dem der Ladungsträger sich auf einer vorgesehenen Route von A nach B befindet. Hinzukommen kann ein Status "Unknown", bei dem ein Ladungsträger zwar transportiert wird, dies aber keiner in der zentralen Datenverarbeitungsanlage 50 hinterlegten Tour zuzuordnen ist.

Der ideale Ablauf sieht dann vor, dass ein ständiger Wechsel zwischen den Zuständen "Lagern" und "Tour" erfolgt. Konkret bedeutet dies, dass sich alle Ladungsträger, die nicht bewegt werden, im Zustand "Lagern" befinden. Für den Fall, dass ein Ladungsträger bewegt werden soll, muss eine entsprechende Tour im Portal der zentralen Datenverarbeitungsanlage 50 eingegeben werden. Der Ladungsträger erkennt durch Abfrage beim Portal, dass eine Tour eingegeben wurde und wechselt in den gleichnamigen Zustand "Tour". Nach dem Zustandswechsel kann der Ladungsträger transportiert werden. Hat er schließlich sein Ziel erreicht und wird zum Entladen abgestellt, wird erneut der Zustand "Lagern" eingenommen und es wird auf die Eingabe einer neuen Tour gewartet.

Zu einem nicht idealen Ablauf kommt es, wenn der Ladungsträger seine Position verändert, ohne dass zuvor eine entsprechende Eingabe im Portal gemacht wurde. In diesem Fall wechselt der Ladungsträger in den Zustand "Unknown". Dabei ist es unerheblich, ob es sich um eine richtige Tour handelt, die lediglich aus Versehen nicht in das Portal eingegeben wurde oder ob der Ladungsträger unbefugt entwendet wurde. Das Problem hierbei ist, dass der Ladungsträger nicht von selbst erkennen kann, wann er erneut in den Zustand "Lagern" wechseln soll, da kein Endpunkt für den Transport bekannt ist. Daher kann im Portal eine Möglichkeit für eine manuelle Eingabe vorgesehen sein, um eine solche Tour manuell zu beenden und den Ladungsträger in den Zustand "Lagern" zu versetzen. Ist der "Unknown"-Zustand verlassen, kann wieder mit dem idealen Ablauf fortgefahren werden.

Im Zustand "Unknown" kann ferner vorgesehen sein, dass sich das Intervall der Abfragen nach neuen Tourdaten mit der Zeit verringert. Beispielsweise kann die Telematikeinheit am Anfang alle 15 Minuten aufwachen und eine Abfrage starten. Verläuft diese erfolglos und der Zustand "Unknown" kann nicht durch neue Tourdaten verlassen werden, kann das Intervall auf 24 Stunden erhöht werden. Dies bedeutet zwar, dass die Telematikeinheit nun sehr träge auf neue Nachrichten aus dem Portal reagiert, aber es spart Strom. Würde die Telematikeinheit in diesem Zustand weiterhin alle 15 Minuten erfolglos Nachrichten abfragen, bestünde das Risiko, dass die Energiequelle zu früh geleert wäre und ein neuer Zustand beispielsweise gar nicht erreicht werde.

Für die Hardware bedeutet der jeweilige Status, dass die angeschlossenen Komponenten wie Bewegungssensor, RFID-Transponder, Ortungsmittel, Kommunikationsmittel, etc. unterschiedliche, an die reale Gegebenheit angepasste Ereignisse auslösen können, was in Abhängigkeit vom Status zu unterschiedlichen Aktionen der Telematikeinheit 10 führt. Wichtig ist beispielsweise, dass die Telematikeinheit nicht kontinuierlich auf neue Nachrichten von der zentralen Datenverarbeitungsanlage 50 wartet. Um die Energiequelle zu schonen, kommt es nur zu einem gelegentlichen Abruf der Nachrichten aus dem Portal. Dabei befindet sich die Überwachungseinheit 40 der Telematikeinheit 10 vorzugsweise in einem Betriebszustand, in dem wenig Strom verbraucht wird und wenn beispielsweise die Aktivierungseinheit 30 ein relevantes Ereignis über die Echtzeituhr und/oder das Sensormodul 33 erfasst, wird die Überwachungseinheit durch ein Aktivierungssignal der Aktivierungseinheit 30 "aufgeweckt".

Das Intervall zwischen den Abfragen ist dabei ein wichtiger Unterschied zwischen den Zuständen "Lagern" und "Tour". Befindet sich ein Ladungsträger im Zustand "Lagern", so kommt es durch verschiedene Ereignisse dazu, dass die Telematikeinheit nach neuen Nachrichten im Portal schaut. Dies ist zum einen die Bewegung des Ladungsträgers, die beispielsweise beim Aufnehmen eines Containers passiert und von dem Sensormodul 33 detektiert werden kann. Zum anderen kann es sich um einen 24-Stunden-Rhythmus handeln, innerhalb dessen die Telematikeinheit Informationen von dem Portal abfragt, was von der Echtzeituhr 32 getriggert wird.

Der wesentliche Vorteil der Erfindung besteht nun darin, dass eine Tour-Nachricht des Portals automatisch beim Aufnehmen des Ladungsträgers von der Telematikeinheit 10 empfangen wird und somit der Zustand "Tour" eingenommen werden kann. Im Zustand "Tour" kann dann durch die empfangenen Tourdaten vorgegeben sein, in welchem Intervall die Telematikeinheit 10 auf der Tour von A nach B Positionsdaten an die Zentrale übermitteln soll. Auch dieses Intervall kann von der Aktivierungseinheit 30 gesteuert werden, indem sie die Überwachungseinheit in dem durch die Tourdaten vorgegebenem Intervall aufweckt, damit diese dann die Positionsdaten übermitteln kann.

Üblicherweise wäre das Sendeintervall bei einer Tour kleiner als im Zustand "Lagern", wobei es im Zustand "Lagern" auch vorgesehen sein kann, dass gar keine Übermittelung von Positionsdaten erfolgen soll, sondern nur ein gelegentliches Abrufen von möglichen neuen Nachrichten aus dem Portal. Im Zustand "Tour" kann dann vorgesehen sein, dass zwar eine periodische Übermittelung von Positionsdaten erfolgen soll, aber kein Abfragen von neuen Nachrichten des Portals, bevor nicht wieder der Zustand "Lagern" eingenommen wurde.

Der Zustand "Tour" kann dann beispielsweise beendet werden, wenn sich der Ladungsträger innerhalb bestimmter Positionsdaten befindet, d.h. innerhalb eines definierten Fangkreises. Es kann jedoch auch die beschriebene RFID-Technologie zum Einsatz kommen, um die Ankunft des Ladungsträgers in einem Frachtzentrum mit einem RFID-Lesegerät am Eingang zu erfassen und den Ladungsträger daraufhin in den Zustand "Lagern" zu versetzen, in dem dann keine weitere Übermittelung von Positionsdaten mehr erforderlich ist. Da es möglich ist, dass der Ladungsträger nach Passieren des RFID-Lesegerätes noch bewegt wird, kann es vorteilhaft sein, den erneuten Wechsel in den Status "Tour" dann nicht durch einen Bewegungssensor zu aktivieren, sondern erneut durch ein RFID-Lesegerät, das von der Telematikeinheit 10 passiert wird.

Hierbei ist eine Übermittelung von Positionsdaten oder die Abfrage von Daten aus dem Portal somit nicht abhängig von einem fest in der Telematikeinheit programmierten Intervall, sondern vom Zustand des Ladungsträgers und von den jeweiligen Tourdaten. Der Zustand eines Ladungsträgers ergibt sich insbesondere aus relevanten Ereignissen wie einem Zeitpunkt auf der Echtzeituhr 32, einem Signal des Sensormoduls 33 oder dem Erreichen bestimmter Positionsdaten. Dies ermöglicht eine höhere Flexibilität der Telematikeinheit und bietet gegenüber dem Stand der Technik weitere Möglichkeiten für eine Energieeinsparung, da der Betrieb der Telematikeinheit noch gezielter auf den jeweiligen Zustand des Ladungsträgers und die von einem Nutzer geforderten Funktionen abgestimmt werden kann.

### Bezugszeichenliste:

- 10: Telematikeinheit
- 11: Datenübertragungsmittel
- 12: Energiequelle
- 13: Speicher
- 20: Ladungsträger, Container, Wechselbrücke
- 30: Aktivierungseinheit
- 31: Erste Recheneinheit
- 32: Echtzeit-Uhr
- 33: Sensormodul
- 40: Überwachungseinheit
- 41: Zweite Recheneinheit
- 42: Ortungsmittel, GPS-Modul
- 43: Kommunikationsmittel, GSM-Modul, GPRS-Modul
- 50: Zentrale Datenverarbeitungsanlage, Middleware

## Patentansprüche

1. Telematikeinheit (10) zur Überwachung eines Ladungsträgers (20), wenigstens umfassend einen Speicher (13), eine Aktivierungseinheit (30), eine Überwachungseinheit (40) und eine Energiequelle (12), die zur Energieversorgung der Komponenten der Telematikeinheit (10) dient,
**dadurch gekennzeichnet,**
**dass** die Aktivierungseinheit (30) wenigstens eine Echt-Zeit-Uhr (32), ein Sensormodul (33) und einen erste Recheneinheit (31) zur Steuerung der Aktivierungseinheit (30) aufweist, und dass die Überwachungseinheit (40) wenigstens ein Ortungsmittel (42), ein Kommunikationsmittel (43) und eine zweite Recheneinheit (41) aufweist, und dass zwischen die Aktivierungseinheit (30) und die Überwachungseinheit (40) Datenübertragungsmittel (11) geschaltet sind, mit denen die Aktivierungseinheit (30) und die Überwachungseinheit (40) miteinander verbindbar sind, wobei die erste Recheneinheit (31) der Aktivierungseinheit (30) ausgebildet ist, um ein Signal der Echt-Zeit-Uhr (32) oder des Sensormoduls (33) auszuwerten und aufgrund dieses Signals ein Aktivierungssignal an die Überwachungseinheit (40) zu übermitteln, mittels dessen die Überwachungseinheit (40) von einem Bereitschaftszustand mit geringerem Stromverbrauch in einen Arbeitszustand mit höherem Stromverbrauch schaltbar ist, und dass die zweite Recheneinheit (41) der Überwachungseinheit (40) ausgebildet ist, um wenigstens durch das Ortungsmittel (42) erzeugte Positionsdaten über das Kommunikationsmittel (43) an eine zentrale Datenverarbeitungsanlage (50) zu senden und/oder Informationen von dieser abzufragen, wobei im Speicher (13) der Überwachungseinheit (40) Tourinformationen für den Ladungsträger (20) gespeichert sind, und die Recheneinheiten (30,40) der Telematikeinheit (10) Mittel zur Verknüpfung von diesen Tourinformationen mit durch die Echtzeituhr (32), das Sensormodul (33) und/oder das Ortungsmittel (42) bereitgestellten Informationen und zur Auswertung dieser Verknüpfung aufweisen.

2. Telematikeinheit nach Anspruch 1,
**dadurch gekennzeichnet,**
**dass** das Sensormodul (33) der Aktivierungseinheit (30) einen Bewegungssensor und/oder ein RFID-Transponder aufweist.

3. Telematikeinheit nach einem der Ansprüche 1 und 2,
**dadurch gekennzeichnet,**
**dass** das Ortungsmittel (42) der Überwachungseinheit (40) ein GPS-Modul aufweist und/oder das Kommunikationsmittel (43) der Überwachungseinheit (40) ein GSM-Modul oder GPRS-Modul aufweist.

4. Verfahren zum Betrieb einer Telematikeinheit (10) nach einem der Ansprüche 1 bis 3,
**dadurch gekennzeichnet,**
**dass** die erste Recheneinheit (31) bei Erreichen eines definierten Zeitpunktes ausgelöst durch die Echtzeituhr (32) oder bei einem Signal des Sensormoduls (33) ein Aktivierungssignal an die Überwachungseinheit (40) übermittelt, wobei dieses Aktivierungssignal die Überwachungseinheit (40) von einem Bereitschaftszustand mit geringerem Stromverbrauch in einen Arbeitszustand mit höherem Stromverbrauch schaltet, und dass die Recheneinheiten (30,40) der Telematikeinheit (10) daraufhin bereitgestellte Informationen des Ortungsmittels (42), der Echtzeituhr (32) und/oder des Sensormoduls (33) mit den Tourinformationen für den Ladungsträger (20) verknüpfen und auswerten, wobei die Recheneinheiten (30,40) der Telematikeinheit (10) anhand dieser Auswertung ermitteln, zu welchen Zeitpunkten wenigstens die durch das Ortungsmittel (42) erzeugten Positionsdaten über das Kommunikationsmittel (43) an die zentrale Datenverarbeitungsanlage (50) zu übermitteln sind und/oder Informationen von dieser abzufragen sind und diese Übermittelung und/oder Abfrage entsprechend erfolgt.

5. Verfahren nach Anspruch 4,
**dadurch gekennzeichnet,**
**dass** ein Signal des Sensormoduls (33) ausgelöst wird, wenn ein Bewegungssensor des Sensormoduls (33) eine Bewegung des Ladungsträgers (20) detektiert.

6. Verfahren nach Anspruch 4,
**dadurch gekennzeichnet,**
**dass** ein Signal des Sensormoduls (33) ausgelöst wird, wenn ein RFID-Transponder des Sensormoduls (33) detektiert, dass er von einem RFID-Lesegerät in der Nähe des Ladungsträgers (20) erfasst wurde.

7. Verfahren nach einem der Ansprüche 4 bis 6,
**dadurch gekennzeichnet,**
**dass** die Tourinformationen im Speicher (13) Übermittelungsinformationen zu wenigstens zwei Zuständen des Ladungsträgers (20) umfassen, wobei diese Übermittelungsinformationen Angaben zu dem Intervall beinhalten, mit dem wenigstens durch das Ortungsmittel (42) erzeugte Positionsdaten an die zentrale Datenverarbeitungsanlage (50) übermittelt werden sollen, wobei dieses Intervall für einen ersten Zustand anders ist als für einen zweiten Zustand.

8. Verfahren nach Anspruch 7,
**dadurch gekennzeichnet,**
**dass** die Recheneinheiten (30,40) der Telematikeinheit (10) Informationen zum Zustand eines Ladungsträgers (20) zur Bestimmung des Übermittelungsintervalls von wenigstens den Positionsdaten an die zentrale Datenverarbeitungsanlage (50) aus den Positionsdaten des Ortungsmittels (42), durch die Echtzeituhr (32) und/oder durch das Sensormodul (33) erhalten.

9. Verfahren nach Anspruch 8,
**dadurch gekennzeichnet,**
**dass** für die Recheneinheiten (30,40) der Telematikeinheit (10) ein erster Zustand des Ladungsträgers (20) gegeben ist, sobald das Sensormodul (33) ein Signal an die zweite Recheneinheit (41) der Überwachungseinheit (40) übermittelt.

10. Verfahren nach Anspruch 8,
**dadurch gekennzeichnet,**
**dass** für die Recheneinheiten (30,40) der Telematikeinheit (10) ein zweiter Zustand des Ladungsträgers (20) gegeben ist, sobald die Positionsdaten des Ortungsmittels (42) innerhalb eines in den Tourinformationen definierten Fangkreises liegen.

11. Verfahren nach Anspruch 6 und 8,
**dadurch gekennzeichnet,**
**dass** für Recheneinheiten (30,40) der Telematikeinheit (10) ein erster oder zweiter Zustand des Ladungsträgers (20) gegeben ist, sobald ein RFID-Transponder des Sensormoduls (33) detektiert, dass er von einem RFID-Lesegerät in der Nähe des Ladungsträgers (20) erfasst wurde.

12. Verfahren nach einem der Ansprüche 7 bis 11,
**dadurch gekennzeichnet,**
**dass** im zweiten Zustand des Ladungsträgers (20) keine Übermittelung von Positionsdaten an die zentrale Datenverarbeitungsanlage (50) erfolgt.

13. Verfahren nach einem der Ansprüche 4 bis 12,
**dadurch gekennzeichnet,**
**dass** die Recheneinheiten (30,40) der Telematikeinheit (10) an einem in den Tourinformationen definierten Zeitpunkt durch das Ortungsmittel (42) die Position der Telematikeinheit (10) ermitteln, und wenn diese Position nicht mit den für diesen Zeitpunkt in den Tourinformationen vorgegebenen Position übereinstimmt, über die Kommunikationsmittel (43) ein entsprechendes Signal an die zentrale Datenverarbeitungsanlage (50) übermittelt.

14. Verfahren nach einem der Ansprüche 4 bis 13,
**dadurch gekennzeichnet,**
**dass** veränderliche Tourinformationen von der zentralen Datenverarbeitungsanlage (50) über das Kommunikationsmittel (43) an die Telematikeinheit (10) übermittelt und im Speicher (13) hinterlegt werden.
